# EUROPEAN PATENT APPLICATION

(11) **EP 1 340 420 A1**
(43) Date of publication of application: **03.09.2003**
(21) Application number: 03003970.5
(22) Date of filing: 22.02.2003
(51) Int. Cl.: A01F 15/08

(54) **Drive arrangement for a baler**

(30) Priority: 11.03.2002 US 95239; 28.02.2002 US 84906
(71) Applicant: DEERE & COMPANY, Moline, Illinois 61265-8098 (US)
(72) Inventor: Roth, Darin Ledru, Ottumwa, IA 52501 (US)
(74) Representative: Magin, Ludwig Bernhard

(57) **Abstract**

Various embodiments of a drive arrangement (10) for a large rectangular baler aim to drive a plunger for compressing the crop being baled, and for driving auxiliary functions. In all embodiments, power delivered by a main shaft (14, 14', 14'') is divided between an auxiliary function drive arrangement (62) and a plunger drive arrangement (54). In all embodiments, the rotation of the shaft carrying the flywheel (43 24, 24', 72) due to the inertia of the flywheel (43) is ineffective for driving the plunger drive arrangement (54) and auxiliary function drive arrangements (62) when power to the main drive shaft (14, 14', 14'') is cut off.

## Description

The present invention concerns a drive arrangement for a baler for producing parallelepiped bales, including a main power shaft coupled for driving a plunger drive arrangement and an auxiliary function drive arrangement, and a flywheel located between said main power shaft and at least one of said plunger drive arrangement and auxiliary function drive arrangement.

It is common practice to design so-called large square or rectangular balers so as to be driven from the PTO of the towing tractor. These drive arrangements often contain a flywheel for smoothing the power flow, however, after the PTO power is cut or stopped, it takes several seconds for the flywheel to stop because of its stored energy. Consequently, pick-up and feed components, as well as the plunger drive, continue to work. If the reason for stopping was because of a foreign object being fed into the baler, then the continued working of the baler components could result in damage to the baler. Also, if the operator stopped so as to inspect some malfunction of the baler, then the coasting parts could possibly endanger the operator if he came quickly to the baler once the PTO was turned off. An example of such a baler drive arrangement is disclosed in U.S. Patent No. 4,135,444, issued 23 January 1979.

One known large rectangular baler uses the tractor PTO to drive a shaft carrying a flywheel, this shaft in turn being coupled to a pump which supplies the fluid for driving both the plunger and various auxiliary functions of the baler. Thus, the respective hydraulic motors and/or cylinders used to drive the plunger and auxiliary functions continue to receive working fluid for a period of time after power to the PTO is cut off.

It is regarded as a problem, that the time for these components to coast to a stop may be sufficient to permit damage to the baler or for an operator to get entangled in moving parts.

U.S. Patent No. 2,644,283, issued 7 July, 1953, discloses a baler for making rectangular bales, with the plunger and wire tying shuttle being powered by hydraulic cylinders that are supplied by the same pump. Apparently, no flywheel is used in this design.

The problem to be solved with this invention is seen in the fact, that in such balers the inertia of the flywheel can cause damage although the power supply is interupted.

This problem is solved by the teaching of claim 1, whereas the features in the depending claims provide for a further development and improvement of this teaching.

By means of this invention is provided a novel drive arrangement with a flywheel which is embodied so as not to cause the continued driving of the plunger once power is disconnected from the main power shaft.

According to the invention a drive arrangement is provided, in which - if the flywheel is associated only with the plunger drive - the baler drive arrangement including components that operate such that when power to the main power shaft is cut off, the plunger and auxiliary functions stop immediately, with only the flywheel of the plunger drive remaining in motion.

In a first embodiment a drive arrangement is provided which includes a plunger and auxiliary functions that are hydraulically driven, with power from the main power shaft being split, with one path going through a flywheel clutch to a flywheel and then to a plunger drive pump, and with another path going to drive one or more pumps for supplying pressure fluid to hydraulic auxiliary function drive components.

According to a second embodiment, power flow from a main power shaft goes through a power splitting transmission so as to be divided between a plunger drive shaft, which carries a flywheel, and an auxiliary function drive shaft, with a normally-engaged, plunger drive control clutch being coupled between the flywheel and a plunger drive arrangement. In this design either an one-way clutch is provided between the power splitting transmission and the flywheel, or a normally-engaged, auxiliary function drive control clutch is provided between the power splitting transmission and the auxiliary function drive arrangement. In both cases, the normally-engaged clutches are controlled so as to become automatically disengaged in response to power being cut off to the main power shaft.

Finally there is provided a baler drive arrangement according to a third embodiment in which the flywheel is mounted to a main power shaft that is coupled to a power splitting transmission for splitting power between a plunger drive shaft and an auxiliary function drive shaft, and in which a normally-engaged coupling device is located between the flywheel and the power splitting transmission and operable for automatically disconnecting power to the power splitting transmission, and, hence, to the plunger and auxiliary function drive shafts in response to power to the main power shaft being shut off.

The invention will become apparent from a reading of the ensuing description together with the appended drawings.
- FIG. 1: is a somewhat schematic, top plan view of the drive arrangement for powering pumps for supplying pressure fluid to hydraulic motors for driving the plunger and auxiliary functions of the baler, with some parts being shown in horizontal cross section.
- FIG. 2: is a schematic representation of a second embodiment of the invention wherein power is distributed from the main power shaft to the plunger and auxiliary functions drive arrangements by other than fluid pressure generating components.
- FIG. 3: is a schematic representation of a third embodiment of the invention somewhat like the embodiment illustrated in FIG. 2, but wherein the flywheel is located upstream from the power splitting transmission.
- FIG. 4: is a schematic electrical diagram showing the control for automatically effecting disengagement of the normally-engaged clutches associated with the embodiments illustrated in FIGS. 2 and 3.

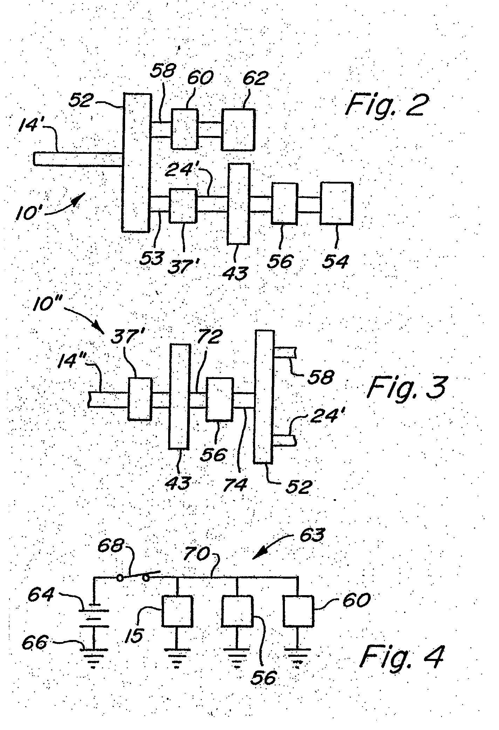

Referring now to the drawing, there is shown a drive arrangement 10 for producing a source of pressurized fluid for operating the hydraulic actuator for driving the plunger and various hydraulically powered devices for driving the various auxiliary functions of a large rectangular or square baler. The drive arrangement 10 is mounted on a tongue 12 adapted for connection to a main frame of the baler. The drive arrangement 10 includes a fore-and-aft extending, main drive or power shaft 14 located centrally between opposite sides of the tongue 12 and having a push-on coupling at its forward end adapted for attachment to a tractor power take-off (PTO) shaft (not shown) to which power from the tractor transmission may be connected and disconnected by operation of an electrically controlled PTO clutch 15, shown schematically in FIG. 4. A rear end of the main drive or power shaft 14 is rotatably supported in a bearing 18 that is fixed to a first cross member 20 extending between opposite sides of the tongue 12.

A power splitting transmission 22 is coupled to the main drive shaft 14 for dividing power between a first output shaft 24 for powering a plunger drive arrangement and a second output shaft (not visible) for powering an auxiliary function drive arrangement. The power splitting transmission 22 includes a drive pulley 26 that is fixed for rotation with the main drive shaft 14, a first driven pulley 28, that is mounted for rotating freely about the first shaft 24, and a second driven pulley 30, that is fixed on the hidden second shaft. A drive belt 32 encompasses the pulleys 26, 28 and 30.

As considered from the view point of a person standing behind the tongue 12 and facing forward, the first output shaft 24 is located to the right of, and disposed parallel to, the main drive shaft 14, the output shaft 24 having a rear section rotatably supported in spaced apart, front and rear bearings 33 and 34 that are respectively fixed to the cross member 20 and to a second cross member 36 spaced behind and extending parallel to the cross member 20. The hidden second output shaft is located to the left of, and is also disposed parallel to the main drive shaft 14.

Power is transferred from the first driven pulley 28 to the first output shaft 24 by a combined friction and one-way clutch 37 carried on a forward section of the shaft 24. It is noted that when the PTO is first engaged, slippage may initially occur between a set of clutch friction elements that are secured to the pulley 28 and a set of the friction elements that are fixed to the shaft 24 until the shaft comes up to the speed determined by that of the main drive or power shaft 14. The drive shaft 24 is connected to a variable displacement, hydraulic plunger drive pump 38 by a coupling 40 received on a rear end of the shaft 24 and on a forward end of an input shaft 42 of the pump 38. The pump 38 is adapted for providing pressurized fluid for operating a two-way plunger drive cylinder. The delivery of power for driving the pump 38 is evened out by a flywheel 43 fixed to the first output shaft 24 at a location between the bearings 33 and 34.

Mounted in tandem at the right side of the tongue 12 are front and rear, variable displacement, hydraulic auxiliary function pumps 44 and 46, respectively. The front pump 44 is fixed to the cross member 20 and includes an input shaft which is the hidden second output shaft on which the second driven pulley 30 is mounted. The auxiliary function drive pumps 44 and 46 are adapted for supplying pressurized fluid for operating a plurality of hydraulic actuators that are respectively used for driving or controlling operation of the various auxiliary functions of the baler 10

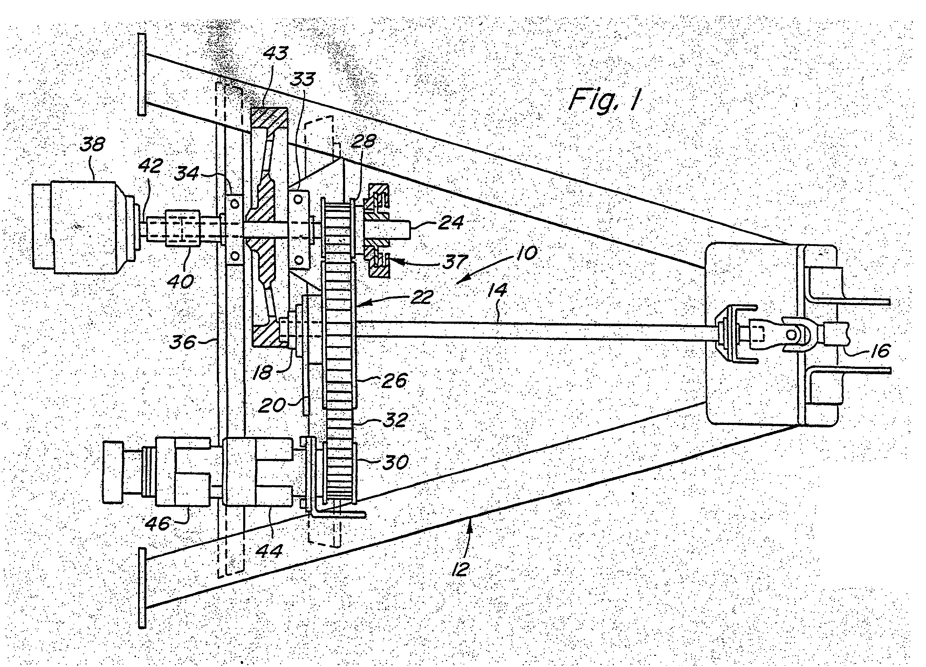

Assuming that the drive arrangement 10, disclosed in FIG. 1, is in operation, with the PTO of the towing tractor being turned on, the main drive shaft 14 will be driven from the tractor power take-off shaft. Thus, with the main drive shaft 14 rotating, the drive belt 32 will transfer power to the shaft 24, by way of the combined friction and one-way clutch 37, and, hence to the plunger drive pump 38, and also to the auxiliary function drive pumps 44 and 46. Assuming then that a condition arises requiring the baler drive system to be shut down, the operator will turn off the tractor PTO. This will immediately result in the main drive shaft 14 coming to a halt so that power is no longer delivered to the drive shaft 24 via the clutch 37. The inertia of the flywheel 43 will cause continued rotation of the shaft 24 until the flywheel 43 coasts to a stop. Although the plunger pump 38 will be driven, other controlling arrangements, not otherwise pertinent to this disclosure, will operate to return the displacement of the pump 38 to zero, if it is not already there, so that no pressurized fluid is available for operating the plunger.

However, because the main drive shaft 14 is no longer being driven and the one-way clutch 37 operates such that the rotation of the shaft 24, caused by the inertia of the flywheel 43, is not transferred back to the main drive shaft 14, the auxiliary function drive pumps 44 and 46 will no longer supply pressurized fluid to the auxiliary function hydraulic drive actuators and these components will immediately stop.

If the operator does leave the tractor and approach the baler prior to the flywheel coming to a stop, a manually operable brake (not shown) is provided for arresting the rotation of the flywheel 43.

Thus, it will be appreciated that the drive arrangement 10 operates in a manner which results in the driven components, that are associated with the processing of the crop material being baled, coming to a stop once the operator turns off the PTO of the towing tractor so as to prevent these components from being damaged by foreign objects contained in the crop material or from working against a mass of crop material that is plugging operation of the baler. Also, it is clear that because all of the baler function, save the flywheel 43, quickly come to rest once the PTO is turned off, the danger of the operator becoming entangled in moving parts is practically eliminated.

While a drive belt arrangement has been provided as a power splitting transmission for transferring power from the main drive or power shaft 14 and the first output shaft 24, and the drive shaft for the auxiliary function drive pumps 44 and 46, it is to be understood that a gear transmission could perform this function as well.

Referring now to FIG. 2, there is schematically shown an alternative drive arrangement 10' that does not preserve the simplicity and flexibility of the more preferred drive arrangement 10, shown in FIG. 1, but does have the desirable feature of the flywheel 43 becoming isolated from the crop processing components of the baler once power to the main drive shaft is cut off. Specifically, the drive arrangement 10' includes a main power or drive shaft 14' that is coupled to the tractor PTO and to a power-splitting transmission 52. A first output shaft 53 of the transmission 52 is coupled, via a combined friction and one-way clutch 37' to a first output shaft 24' that is coupled to a plunger drive arrangement 54 by way of a normally-engaged plunger drive control clutch 56. Fixed on the shaft 24' at a location between the clutch 37' and the plunger drive control clutch 56 is the flywheel 43. A second output shaft 58 of the transmission 52 is coupled, by a normally-engaged, auxiliary function control clutch 60 to an auxiliary function drive arrangement 62.

The control clutches 56 and 60 are of any type that may be remotely operated to interrupt power flow in response to cutting off power to the main drive 14'. For example, the clutches 56 and 60 may be electrically controlled clutches which include clutch plates that are spring-released upon turning off the electrical current to them when the PTO is turned off, or in the case when the main drive shaft 14' is driven by other than the PTO, it is released in response to cutting off the other power source. It is here noted, that the clutch 60 is necessary only if the one-way clutch 37' is omitted, as it may be if there is no harm in the shaft 14' coasting once power is disconnected from it.

Referring now to FIG. 3, there is provided another embodiment of the invention for achieving the broad object of automatically disassociating the flywheel 43 from the plunger and auxiliary function drive arrangements when power to the main power shaft is cut off. Specifically, a baler drive arrangement 10" includes a main power shaft 14" that is coupled to a first intermediate shaft 72 by the combined friction and one-way clutch 37'. The flywheel 43 is mounted on the shaft 72. The shaft 72 is coupled to a second intermediate shaft 74 by the normally-engaged clutch 56, the intermediate shaft 74 providing the input to the power splitting transmission 52 that delivers power to the first output shaft 24' and the second output shaft 58.

Referring now to FIG. 4, there is shown an electrical circuit 63 for use with the embodiments shown in FIGS. 2 and 3 for automatically disengaging the normally-engaged clutches 56 and/or 60 in response to disengagement of the PTO clutch 15. Specifically, the electrical circuit 63 includes a source of power in the form of a battery 64, for example, of the towing tractor, coupled between ground 66 and a switch element side of a PTO control switch 68, the latter having its "on" contact coupled to a lead 70 having parallel connections with the PTO clutch 15, and each of the normally-engaged clutches 56 and 60. Thus it will be appreciated that when the switch 68 is closed, as shown, current will be supplied for actuating the clutches 15, 56 and 60 such that they will become engaged. Of course, upon opening the PTO control switch 68 all of the clutches will become disengaged.

Assuming operation of the FIG. 2 embodiment, but with the one-way clutch 37' in place and omitting the auxiliary function control clutch 60, turning off power to the main power shaft 14', by operation of the PTO control switch 68, will result in the plunger control clutch 56 becoming automatically disengaged so as to prevent further driving of the plunger drive arrangement 54. The inertia of the flywheel 43 will cause it to continue to drive the shaft 24', but the one-way clutch 37' prevents the rotation of the shaft 24' from being transferred back into the power-splitting transmission 52. Since no power is coming into the transmission 52, no power is delivered to the auxiliary function drive arrangement 62.

If the one-way clutch 37' is omitted, and the auxiliary function control clutch 60 is used, the inertia of the flywheel 43 will cause the transmission 52 and shaft 14' to free-wheel, but, because the clutch 60 is automatically disengaged in response to shutting off the power to the main drive shaft 14' by opening the PTO control switch 68, no power will be delivered to the auxiliary function drive arrangement 62.

Now turning to the operation of drive arrangement 10'' of the embodiment of FIG. 3, and noting that clutch 60 is not used, it will be appreciated that the main power shaft 14'' will receive power from the tractor PTO, or another source of power, so long as the clutch 15 is in its "on" condition established by having the switch 68 closed. Power will flow from the shaft 14'' to the intermediate shaft 72, and, thus, to the flywheel 43, by way of the one-way clutch 37'. Power is then transferred from the shaft 72 to the shaft 74, by the normally-engaged clutch 56, and then to the power splitting transmission 52 which divides the power between the first and second output shafts 24' and 58. Then, if the control switch 68 is opened, the clutch 15 will become disengaged so as to discontinue the input of power to the shaft 14'', and the normally-engaged clutch 56 will become disengaged so as to discontinue the input of power to the shaft 74, and, hence, to the first output shaft 24' and the second output shaft 58. Although the shaft 72 will continue to rotate due to the inertia of the flywheel 43, this rotation is prevented from being fed back to the PTO by the one-way clutch 37 and from being fed forward to the power splitting transmission 52 by the automatically disengaged clutch 56. Accordingly, once the input of power to the main drive shaft 14'' is discontinued by opening the switch 68, power is no longer available to drive the plunger and auxiliary functions even though the flywheel 43 may continue rotating for a short while.

## Claims

1. A drive arrangement (10, 10', 10'') for a baler for producing parallelepiped bales, including a main power shaft (14, 14', 14'') coupled for driving a plunger drive arrangement (54) and an auxiliary function drive arrangement (62), and a flywheel (43) located between said main power shaft (14, 14', 14'') and at least one of said plunger drive arrangement (54) and auxiliary function drive arrangement (62), **characterized by** a drive component (37, 56) coupled between said flywheel (43) and said at least one of said plunger drive arrangement (54) and auxiliary drive arrangement (62) and being responsive to power being disconnected to said main power shaft (14, 14', 14'') for disassociating said flywheel (43) from said at least one of said plunger drive arrangement (54) and auxiliary function drive arrangement (62).

2. Drive arrangement according to claim 1, **characterized in that** said plunger drive arrangement (54) and/or said auxiliary function drive arrangement (62) are powered by hydraulic fluid pressure

3. Drive arrangement according to claim 1 or 2, **characterized in that** at least one auxiliary function drive supply pump (44, 46) is provided.

4. Drive arrangement according to one or more of the preceding claims, **characterized in that** said drive component is in the form of a normally-engaged, electrically controlled clutch (56); and a control arrangement, preferably an electric circuit (63) being coupled to said electrically controlled clutch (56) for automatically shutting off electrical power to the clutch (56) in response to disconnecting power from said main power shaft (14, 14', 14'').

5. Drive arrangement according to one or more of the preceding claims **characterized in that** said normally-engaged, electrically controlled clutch (56) is coupled so as to be upstream of both said plunger drive arrangement (54) and said auxiliary function drive arrangement (62).

6. Drive arrangement according to one or more of the preceding claims, **characterized in that** the drive component is in the form of a one-way clutch (37, 37')coupled between said main power shaft (14, 14', 14'') and said flywheel (43) for transferring power only in the direction of said flywheel 43 from said main power shaft (14, 14', 14") .

7. Drive arrangement according to one or more of the previous claims, **characterized in that** a power splitting transmission (22, 52) is located for receiving power from said main power shaft (14, 14') and has first and second output shafts (24, 24' 53 and 58), respectively coupled for driving said plunger drive arrangement (54) and said auxiliary function drive arrangement (62); said flywheel (43) being connected to said second output shaft (58); and said drive component (56) being located between said flywheel (43) and said plunger drive arrangement (54).

8. Drive arrangement according to claim 7, **characterized in that** a drive connection (37) in the form of a one-way clutch is coupled between said power splitting transmission (52) and said flywheel (43).

9. Drive arrangement according to claim 7 **characterized by** a second drive component (60) located between said power splitting transmission (52) and said auxiliary function drive arrangement (62) and being responsive to the disconnection of power to said main power shaft (14, 14', 14'') for disassociating said auxiliary function drive arrangement (62) from said flywheel (43).

10. Drive arrangement according to one or more of the preceding claims, charaterized in that said flywheel (43) is located upstream of said power splitting transmission (52), and said drive component (56) being in the form of a normally-engaged clutch located between said flywheel (43) and said power splitting transmission (52) and adapted for being controlled so as to automatically disconnect power flow to said power splitting transmission (52) in response to power being disconnected from said main power shaft (14, 14', 14'').

11. Drive arrangement according to one or more of the preceding claims **characterized in that** said flywheel (43) is mounted to said output shaft (24, 24'); and a plunger drive hydraulic fluid supply pump (38) being connected to said output shaft (24, 24') downstream from said flywheel (43) and adapted for supplying working fluid for powering a hydraulic plunger drive arrangement (54).
